# EUROPÄISCHE PATENTSCHRIFT

(11) **EP 1 361 380 B1**
(45) Veröffentlichungstag und Bekanntmachung des Hinweises auf die Patenterteilung: **28.09.2005**
(21) Anmeldenummer: 03004049.7
(22) Anmeldetag: 25.02.2003
(51) Int. Cl.: F16J 15/46

(54) **Dichteinrichtung**
Sealing arrangement
Dispositif d'étanchéité

(30) Priorität: 08.05.2002 DE 10220842
(43) Veröffentlichungstag der Anmeldung: 12.11.2003
(73) Patentinhaber: FRIMO Group GmbH & Co., 49504 Lotte (DE)
(72) Erfinder: Lange, Wolfgang, 49076 Osnabrück (DE)
(74) Vertreter: Moldenhauer, Herbert

(56) Entgegenhaltungen:
- EP-A- 1 045 179
- DE-A1- 19 615 055
- DE-U- 20 214 798
- US-A- 3 897 088

## Beschreibung

### Technisches Gebiet

Die Erfindung befasst sich mit einer Dichteinrichtung für den Spalt zwischen zwei benachbarten Maschinenteilen, umfassend zumindest einen über einen zusätzlichen Stützkörper aufblasbaren, elastisch dehnbaren Schlauch, der in eine Nut in der Seitenwand eines der Maschinenteile einfügbar ist und der aufgeblasen an eine den Spalt auf der der Nut gegenüberliegenden Seite begrenzende Fläche des anderen Maschinenteils anlegbar ist.

Dichteinrichtungen dieser Art werden beispielsweise bei Schäumwerkzeugen verwendet, bei denen die beiden Werkzeughälften von großer Ausdehnung sind. Es ist dementsprechend schwierig, den Dichtspalt zwischen den beiden aus Hartwerkstoffen bestehenden Formhälften nach dem Schließen der Form so dicht zu verschließen, dass das in flüssigem Zustand eingebrachte Reaktionsgemisch nicht mehr austreten und die Umgebung verunreinigen kann.

### Stand der Technik

Eine Dichtung der im Oberbegriff des Patentbegehrens beschriebenen Art ist aus der DE PS 196 15 055 bekannt und zum sicheren Verschließen des Spaltes zwischen einer Öffnung eines Hauses und einem in die Öffnung einsetzbaren Rahmen aus einem Hartwerkstoff, bestehend aus einem in den Spalt einsetzbaren und aufblähbaren Schlauch, dessen Enden unmittelbar nebeneinander liegend, radial nach innen gezogen und dort auf Schlauchtüllen aufgefädelt sind, über die Druckluft einspeisbar ist. Im Bereich der Schlauchtüllen ist der Schlauch nicht aufblähbar. Außerdem ergibt sich ein Dichtproblem im Dichtspalt radial außerhalb der Schlauchtüllen, weil die Schlauchenden dort von zwei Seiten mit Radien aufeinander stoßen.

Aus der US-A-3 897 088 ist eine Dichtung für das stirnseitige Ende eines Kabels oder einer Leitung bekannt, bei der das stirnseitige Ende auf das geschlossene Ende eines Schlauches aufgesetzt und zusammen mit diesem nach Art eines Kolbens zur Druckerhöhung und radialen Aufweitung des Schlauches in den Innenraum des Schlauches hineingeschoben wird, um das stirnseitige Ende des Kabels oder der Leitung gegenüber der Umgebung abzudichten. Eine radiale Abdichtung des Endes gegenüber dritten Gegenständen wird in der Druckschrift nicht erwähnt.

Aus der DE 199 16 789 C1 sind Dichtschläuche bekannt, die an ihren beiden Enden außenseitig von Formstücken aus einem Hartwerkstoff umschlossen sind, die in ihrem Bereich zugleich eine Dichtfunktion bezüglich des Dichtspaltes haben. Mindestens eines der Füllstücke ist mit einer leitungsförmigen Ausnehmung versehen, durch die Druckluft in den Schlauch eingeblasen werden kann bzw. daraus entlassen werden kann. Dadurch gelingt es, den aufgeblähten Schlauch auf seiner ganzen Länge mit der gegenüberliegenden Fläche des Formwerkzeugs in Eingriff zu bringen und den Dichtspalt auf dieser Länge abzudichten. Auf den unmittelbaren Bereich der Formstücke hat dies keinen Einfluss. Dort kann daher Leckage entstehen. Die bekannte Dichteinrichtung ist daher für Anwendungszwecke nicht geeignet, in denen der Dichtspalt auf der ganzen Länge abgedichtet werden muss. Beispielsweise für die Herstellung von komplexen Schaumkörpern, bei denen auch in den Endbereichen der Dichtschläuche eine sehr genaue Abdichtung erreicht werden soll, wird eine neue Lösung gesucht.

Ein weiterer Nachteil der bekannten Lösung besteht darin, dass die Formstücke teilweise über die Oberflächen der Maschinenteile vorstehen müssen, um eine möglichst gute Abdichtung zu erzielen. Sie bilden daher oftmals ein Hindernis für sekundäre Körper, die bei geöffnetem Formwerkzeug parallel zur Oberfläche des Maschinenteils eingefahren werden. Dies ist beispielsweise oft bei Einlegeteilen der Fall, die zur Verstärkung eines herzustellenden Schaumstoffformteils dienen können. Die vorstehenden Formstücke beeinträchtigen somit in diesen Fällen die Zugänglichkeit des Formwerkzeugs.

### Darstellung der Erfindung

Der Erfindung liegt die Aufgabe zugrunde, eine Dichteinrichtung zu schaffen, die eine sichere Abdichtung auch an den Schlauchenden sicherstellt. Die Dichteinrichtung soll möglichst einfach in ihrem Aufbau sein, keinen besonderen Fertigungsaufwand erfordern und vielseitig einsetzbar sein.

Die Lösung der gestellten Aufgabe erfolgt bei einer Dichteinrichtung der eingangs genannten Art erfindungsgemäß dadurch, dass wenigstens ein Ende des Schlauches mit einer umlaufenden und in seinen Innenraum eingreifenden Einstülpung versehen ist, in die der Stützkörper innenseitig eingefügt ist und dass der Schlauch auch im Bereich der Einstülpung aufblähbar und nach dem Aufblasen auf der ganzen Länge der Nut an das andere Maschinenteil anlegbar ist.

Diese neue Dichteinrichtung ermöglicht eine Ausbildung des Dichtschlauches, bei der die Dichtschlauchenden nicht mehr umgewinkelt werden müssen, sondern das Dichtschlauchende kann gerade auslaufend in der Dichtnut bis zu deren Ende verlegt werden. Durch die Einstülpung bzw. das Umklappen des Schlauches an seinem Ende nach innen wird erreicht, dass dieser bis an sein äußerstes Ende aufblasbar ist. Das nach innen eingestülpte Ende wird bei einer Druckbeaufschlagung mit Druckluft an den Stützkörper angepresst. Der außen liegende Teil des Schlauches wird auf seiner ganzen Länge nach außen aufgebläht und legt sich dabei dichtend an die Gegenfläche an. Endstücke, wie sie zum Stand der Technik gehören, werden nicht benötigt.

Bevorzugt wird die Einstülpung so ausgeführt, dass sie in einem Wulst endet, welcher die im Einbauzustand der Dichteinrichtung dem Ende des Schlauches zugewandte Stirnfläche des Stützkörpers in zumindest einem an den Spalt angrenzenden, ersten Teilbereich axial übergreift. In besonders günstiger Weise wird der Wulst so gelegt, dass er im Einbauzustand der Dichteinrichtung die Stirnfläche in dem ersten Teilbereich axial weiter übergreift als in einem den Spalt nicht begrenzenden zweiten Teilbereich. Der erste Teilbereich ist dabei an der abzudichtenden Fläche des anderen Maschinenteils anlegbar während der zweite Teilbereich dem Nutgrund der Nut des ersten Maschinenteil zugewandt ist, welche den Schlauch aufnimmt. Die Absetzung des zweiten Teilbereichs des Wulstes kann soweit geführt werden, dass sie im Einbauzustand der Dichteinrichtung hinter die Stirnfläche des Stützkörpers zurückspringt. Diese Ausbildung der Einstülpung ermöglicht den Einsatz einer Schlauchtülle als Stützkörper, die mit einem deren Stirnfläche überragenden Füllanschluss versehen ist. Dieser Füllanschluss ist mit einem Rohr verbunden, der einem Adapter zugeführt wird. Dieser Adapter kann um 90 ° versetzt zum Schlauchende im ersten Maschinenteil untergebracht sein.

Um nach der Einbringung der Stützkörpers in die Einstülpung eine sichere Aufblähbarkeit des Schlauches auch im Bereich der Einstülpung sicherzustellen, hat es sich als vorteilhaft bewährt, wenn der Schlauch zumindest dort innenseitig mit in Umfangsrichtung verteilten Rippen oder Nuten versehen ist. Nach der Einstülpung bilden die Lücken zwischen den Rippen und der Schlauchwandung bzw. in den Nuten Strömungskanäle, durch die unter Druck stehendes Strömungsmittel, beispielsweise Druckluft, in den Spalt eindringen und den Schlauch im Bereich der Einstülpung aufblähen kann.

Es ist günstig, wenn der erste Schlauch sowohl in radialer als auch in axialer Richtung dehnbar ist, damit er beim Aufblähen sich voll an die ihn umgebenden Maschinenteile anpassen kann.

### Ausführung der Erfindung

Anhand eines in der Zeichnung dargestellten Ausführungsbeispiels wird die Erfindung nachstehend näher erläutert.

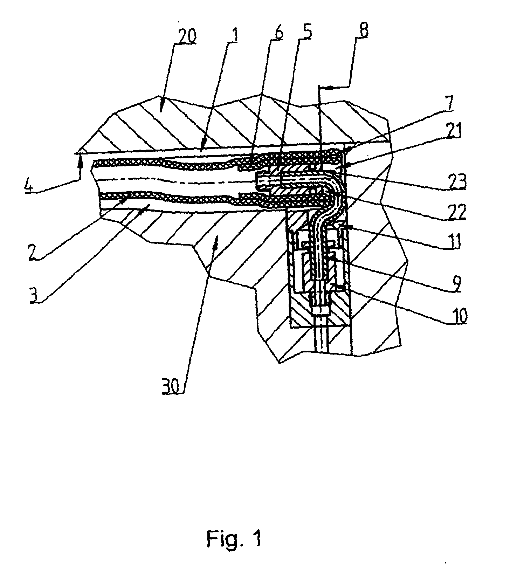

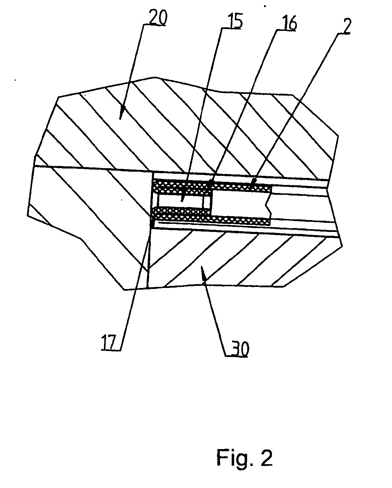

In den beiliegenden Figuren 1 und 2 ist vergrößert im Schnitt der prinzipielle Aufbau der Dichteinrichtung gezeigt. Die Dichteinrichtung soll den Spalt 1 zwischen den benachbarten Maschinenteilen 20 und 30 abdichten. Hauptbestandteil der Dichteinrichtung ist der Schlauch 2, welcher in die Nut 3 im Maschinenteil 30 eingefügt ist. Der Schlauch 2 ist im nicht aufgeblähten Zustand gezeigt. Mit Druckluft gefüllt liegt der Schlauch 2 mit seiner Außenwand an den Wänden der Nut 3 des Maschinenteils 30 und an der Fläche 4 des Maschinenteils 20 an. In der Fig. 2 ist ein Blindabschluss eines Schlauchendes gezeigt, während in der Fig. 1 ein Schlauchende mit einer Druckluftzufuhr dargestellt ist. Die Schlauchenden sind nach innen eingestülpt und in die Einstülpungen 6 bzw. 16 ist jeweils ein Stützkörper 5 bzw. 15 eingefügt. Nach dem Aufblähen des Schlauches 2 legt sich dieser voll an seine Begrenzungsflächen an und es wird eine vollständige Abdichtung auf der ganzen Länge erreicht. Die Schlauchenden liegen mit ihren Wülsten 7 und 17 fest am Maschinenteil 30 an.

Um die Luftzufuhr über den Stützkörper 5 in den Schlauch 2 zu ermöglichen, ist, wie auf der Figur 1 sichtbar, die Einstülpung 6 so ausgestaltet, dass sie in einem Wulst 7 endet, welcher in dem an das Maschinenteil 20 angrenzenden Bereich 21 den Stützkörper 5 axial übergreift. Es ist möglich, wie in der Figur 1 gezeigt, dass auch der zweite Teilbereich 22 der Wulst 7 die Stirnfläche 8 des Stützkörpers 5 überragt. Die unterschiedliche Ausbildung der Wulst 7 gestattet die Einführung des Rohres 9, das mit dem Stützkörper 5 verbunden ist. Der Stützkörper 5 hat in seinem Inneren eine Bohrung, durch welche Druckluft in das Innere des Schlauches 2 gelangen kann. Der Stützkörper 5 ist hier als Schlauchtülle ausgebildet, die den Füllanschluss 23 hat. Das Rohr 9 ist in den Adapter 10 eingefügt, welcher an eine Druckluftquelle angeschlossen ist. Auf dem Adapter 10 befindet sich ein Distanzstück 11, welches den Schlauch 2 vor scharfen Kanten und zu weitem Aufblasen schützt.

Der Stützkörper 5 mit der Druckluftzufuhr ist geringfügig größer als der Stützkörper 15. Für die Unterbringung dieses vergrößerten Stützkörpers 5 ist die Nut 3, wie auf der Zeichnung ersichtlich, an ihrem auslaufenden Ende geringfügig erweitert.

Die Auswahl des Materials für die Stützkörper oder auch für das Rohr bzw. den Adapter 10 ist abhängig von den vor Ort vorhandenen Gegebenheiten. Es ist sicherzustellen, dass der Schlauch 2 schnell und zuverlässig aufgeblasen und nach Durchführung des Schäumvorgangs von Druckluft wieder entleert werden kann.

## Patentansprüche

1. Dichteinrichtung für den Spalt (1) zwischen zwei benachbarten Maschinenteilen (20,30), umfassend zumindest einen über einen zusätzlichen Stützkörper (5) aufblasbaren, elastisch dehnbaren Schlauch (2), der in eine Nut (3) in der Seitenwand eines der Maschinenteile (30) einfügbar ist und der aufgeblasen an eine den Spalt (1) auf der der Nut (3) gegenüberliegenden Seite begrenzende Fläche des anderen Maschinenteils (20) anlegbar ist, **dadurch gekennzeichnet, dass** wenigstens ein Ende des Schlauches (2) mit einer umlaufenden und in seinen Innenraum eingreifenden Einstülpung (6, 16) versehen ist, in die der Stützkörper (5) innenseitig eingefügt ist und dass der Schlauch (2) auch im Bereich der Einstülpung (6,16) aufblähbar und nach dem Aufblasen auf der ganzen Länge der Nut (3) an das andere Maschinenteil (20) anlegbar ist.

2. Dichteinrichtung nach Anspruch 1, **dadurch gekennzeichnet, dass** die Einstülpung (6, 16) in einem Wulst (7, 17) endet, der im Einbauzustand der Dichteinrichtung die diesem Ende zugewandte Stirnfläche (8) des Stützkörpers (5) in zumindest einem an den Spalt (1) angrenzenden ersten Teilbereich (21) axial übergreift.

3. Dichteinrichtung nach einem der Ansprüche 1 oder 2, **dadurch gekennzeichnet, dass** der Wulst (7) im Einbauzustand der Dichteinrichtung die Stirnfläche (8) in dem ersten Teilbereich (21) axial weiter übergreift als in einem den Spalt (1) nicht begrenzenden zweiten Teilbereich (22).

4. Dichteinrichtung nach einem der Ansprüche 1 bis 3, **dadurch gekennzeichnet, dass** der Wulst (7) im Einbauzustand der Dichteinrichtung in dem zweiten Teilbereich (22) hinter die dem Ende des Schlauches (2) zugewandte Stirnfläche (8) des Stützkörpers (5) zurückspringend ausgebildet ist.

5. Dichteinrichtung nach einem der Ansprüche 1 bis 4, **dadurch gekennzeichnet, dass** der Stützkörper (5) als Schlauchtülle ausgebildet ist.

6. Dichteinrichtung nach einem der Ansprüche 1 bis 5, **dadurch gekennzeichnet**, und dass die Schlauchtülle mit einem ihre Stirnfläche (8) überragenden Füllanschluss (23) versehen ist.

7. Dichteinrichtung nach Anspruch 6, **dadurch gekennzeichnet, dass** der Füllanschluss ein Rohr (9) umfasst.

8. Dichteinrichtung nach einem der Ansprüche 1 bis 6, **dadurch gekennzeichnet, dass** der Schlauch (2) innenseitig mit in Umfangsrichtung verteilten Rippen oder Nuten versehen ist.

9. Dichteinrichtung nach einem der Ansprüche 1 bis 8, **dadurch gekennzeichnet, dass** der Schlauch (2) in radialer und in axialer Richtung dehnbar ist.

## Claims

1. A sealing arrangement for the gap (1) between two adjacent machine parts (20, 30), comprising at least one elastically stretchable tube (2), which can be inflated via an additional supporting body (5), can be inserted into a groove (3) in the side wall of one of the machine parts (30) and, when inflated, can be applied against a surface of the other machine part (20), which surface delimits the gap (1) on the side opposite the groove (3), **characterized in that** at least one end of the tube (2) is provided with a turned-in portion (6, 16) which runs around it and extends into its interior and into which the supporting body (5) is inserted on the inside, and **in that** the tube (2) can be inflated in the region of the turned-in portion (6, 16) as well and, after inflation, can be applied against the other machine part (20) over the entire length of the groove (3).

2. A sealing arrangement according to claim 1, **characterized in that** the turned-in portion (6, 16) ends in a bead (7, 17), which, in the fitted state of the sealing arrangement, overlaps axially that end face (8) of the supporting body (5) facing this end in at least a first part region (21) adjacent to the gap (1).

3. A sealing arrangement according to either of claims 1 and 2, **characterized in that**, in the fitted state of the sealing arrangement, the bead (7) axially overlaps the end face (8) in the first part region (21) further than in a second part region (22) which does not delimit the gap (1).

4. A sealing arrangement according to any one of claims 1 to 3, **characterized in that**, in the fitted state of the sealing arrangement, the bead (7) is in the second part region (22) designed to be set back behind that end face (8) of the supporting body (5) facing the end of the tube (2).

5. A sealing arrangement according to any one of claims 1 to 4, **characterized in that** the supporting body (5) is designed as a hose nozzle.

6. A sealing arrangement according to any one of claims 1 to 5, **characterized in that** the hose nozzle is provided with a filling connection (23) projecting beyond its end face (8).

7. A sealing arrangement according to claim 6, **characterized in that** the filling connection comprises a pipe (9).

8. A sealing arrangement according to any one of claims 1 to 6, **characterized in that** the tube (2) is provided on the inside with ribs or grooves distributed in the circumferential direction.

9. A sealing arrangement according to any one of claims 1 to 8, **characterized in that** the tube (2) is stretchable in the radial and the axial direction.

## Revendications

1. Dispositif d'étanchéité pour la fente (1) située entre deux parties de machine (20, 30) voisines, comprenant au moins un tuyau (2) extensible élastiquement et gonflable par le biais d'un corps de support (5) supplémentaire, qui peut être inséré dans une rainure (3) dans la paroi latérale d'une des parties de machine (30) et qui, lorsqu'il est gonflé, peut être mis en contact avec une surface de l'autre partie de machine (20) limitant la fente (1) sur le côté opposé à la rainure (3), **caractérisé en ce qu'**au moins une extrémité du tuyau (2) est pourvue d'une partie retournée (6, 16) circonférentielle qui est rentrée à l'intérieur du tuyau et dans laquelle le corps de support (5) est inséré sur le côté intérieur, et **en ce que** le tuyau (2) peut être gonflé dans la zone de la partie retournée (6, 16) également et peut, après le gonflage, être mis en contact avec l'autre partie de machine (20) sur toute la longueur de la rainure (3).

2. Dispositif d'étanchéité selon la revendication 1, **caractérisé en ce que** la partie retournée (6, 16) se termine par un bourrelet (7, 17) qui, lorsque le dispositif d'étanchéité est monté, dépasse axialement la surface frontale (8) du corps de support (5) située sur le côté de cette extrémité dans au moins une première zone partielle (21) contiguë à la fente (1).

3. Dispositif d'étanchéité selon l'une des revendications 1 ou 2, **caractérisé en ce que**, lorsque le dispositif d'étanchéité est monté, le bourrelet (7) dépasse plus la surface frontale (8) axialement dans la première zone partielle (21) que dans une seconde zone partielle (22) ne limitant pas la fente (1).

4. Dispositif d'étanchéité selon l'une des revendications 1 à 3, **caractérisé en ce que**, lorsque le dispositif d'étanchéité est monté, le bourrelet (7) est exécuté, dans la seconde zone partielle (22), de manière à revenir élastiquement derrière la surface frontale (8) du corps de support (5) située sur le côté de l'extrémité du tuyau (2).

5. Dispositif d'étanchéité selon l'une des revendications 1 à 4, **caractérisé en ce que** le corps de support (5) est exécuté en tant qu'embout à olive.

6. Dispositif d'étanchéité selon l'une des revendications 1 à 5, **caractérisé en ce que** l'embout à olive est pourvu d'un raccord de remplissage (23) saillant sur sa surface frontale (8).

7. Dispositif d'étanchéité selon la revendication 6, **caractérisé en ce que** le raccord de remplissage comprend un tube (9).

8. Dispositif d'étanchéité selon l'une des revendications 1 à 6, **caractérisé en ce que** le tuyau (2) est pourvu, sur le côté intérieur, de nervures ou rainures réparties dans la direction circonférentielle.

9. Dispositif d'étanchéité selon l'une des revendications 1 à 8, **caractérisé en ce que** le tuyau (2) est extensible dans le sens radial et dans le sens axial.
